# EUROPÄISCHE PATENTANMELDUNG

(11) **EP 3 760 520 A1**
(43) Veröffentlichungstag der Anmeldung: **06.01.2021**
(21) Anmeldenummer: 20181675.8
(22) Anmeldetag: 23.06.2020
(51) Int. Cl.: B62D 35/00, B60R 3/02

(54) **VORRICHTUNG ZUR VERBESSERUNG DER AERODYNAMIK AN EINEM NUTZFAHRZEUG**

(30) Priorität: 02.07.2019 DE 102019209623
(71) Anmelder: Magna Exteriors GmbH, 63877 Sailauf (DE)
(72) Erfinder: DIEHL, Peter, 73230 Kirchheim (DE); MOHR, Robert, 71384 Weinstadt (DE)
(74) Vertreter: Rausch, Gabriele

(57) **Zusammenfassung**

Die Erfindung zeigt eine Vorrichtung zur Verbesserung der Aerodynamik eines Nutzfahrzeuges mit einem Führerhaus mit Türen und darunter angeordneten Tritten für den Ein- und Ausstieg und mit einer vorderen Verkleidung , wobei in der vorderen Verkleidung Lufteinlässe vorhanden sind, wobei die Lufteinlässe über Luftleiteinrichtungen in oder an der Verkleidung mit dem vorderen Radkasten des Nutzfahrzeugs und mit einem Luftaustritt verbunden sind, wobei der mindestens eine Tritt des Führerhauses anklappbar ist und mindestens einen Durchströmungsbereich in Fahrzeuglängsrichtung aufweist.

## Beschreibung

Die Erfindung betrifft eine Vorrichtung zur Verbesserung der Aerodynamik eines Nutzfahrzeuges mit einem Führerhaus mit Türen und darunter angeordneten Tritten für den Ein- und Ausstieg und mit einer vorderen Verkleidung , wobei in der vorderen Verkleidung Lufteinlässe vorhanden sind, wobei die Lufteinlässe über Verteilungsstrukturen in oder an der Verkleidung mit dem vorderen Radkasten des Nutzfahrzeugs und mit einem Luftaustritt verbunden sind.

### Stand der Technik

Für Automobile und natürliche auch Lastkraftwagen gilt, je geringer der cw-Wert, desto niedriger ist auch der CO2-Ausstoß. Eine Verbesserung des cw-Wertes um 0,01 bedeutet im Prüfzyklus ein Gramm CO2 weniger pro Kilometer.

Allerdings sind die aerodynamischen Möglichkeiten bei Lastkraftwagen eingeschränkt. Eine Möglichkeit zur Reduktion des cw-Wertes besteht darin, störenden Verwirbelungen im Radkasten zu minimieren, was unter dem Stichwort "Air Curtain" zusammengefasst wird. Darunter versteht man einen Vorhang aus Luft, der durch Schlitze im Stoßfänger entsteht und sich vor oder um das Vorderrad legt.

Aus der WO 2017/ 187 796 A1 ist eine Vorrichtung zur Strömungsoptimierung für ein Fahrzeug bekannt, wobei die Vorrichtung in der Lage ist, den Fahrwiderstand mit einer einfachen Struktur zu reduzieren. Die Anwendung bezieht sich auf eine Vorrichtung für ein Fahrzeug, das eine Stufe zum Ein- und Aussteigen aufweist, wobei diese Stufe unterhalb einer Kabinentür vorgesehen ist. Die Vorrichtung umfasst: einen ersten Öffnungsabschnitt, durch den Luft von vorne einströmt; einen zweiten Öffnungsabschnitt, der sich zum Fahrzeug hin öffnet, um die Luft, die von dem ersten Öffnungsabschnitt eingeführt wird, in einen versenkten Bereich, der die Stufe für das Ein- und Aussteigen bildet, und/oder in einen Seitenbereich, der sich nach außen in einer Fahrzeugbreitenrichtung des versenkten Bereichs befindet, zu blasen; und einen Verbindungsweg, durch den der erste Öffnungsabschnitt und der zweite Öffnungsabschnitt in Verbindung stehen.
Es besteht aber das Problem bei der Anwendung für Nutzfahrzeuge, dass die Stufen oder Tritte oftmals nicht in zurückgesetzten Bereichen des Führerhauses angebracht werden können, sondern nach außen abstehen und den Luftstrom behindern.

JP S57- 158 543 U zeigt eine Frontschürze mit Öffnungen, die einen Luftstrom erzeugen, der zur Sauberhaltung des Seitenbereichs des Fahrzeugs dient.

DE 10 2004 026 464 A1 beschreibt ein Fahrerhaus für Nutzfahrzeuge, insbesondere für Lastkraftwagen, mit einer Frontpartie und zwei Seitenwänden, in denen jeweils eine Tür vorgesehen ist, unterhalb der ein Einstiegsbereich mit Trittflächen angeordnet ist, wobei die Einstiegsbereiche nach vorne hin offen sind.

Es ist Aufgabe der Erfindung, eine Vorrichtung zur Verbesserung der Aerodynamik eines Nutzfahrzeuges mit einem Führerhaus mit Tritten zu schaffen, die eine optimalen Luftverlauf am Vorderrad des Nutzfahrzeugs bereitstellt.

### Beschreibung der Erfindung

Die Aufgabe wird gelöst mit einer Vorrichtung zur Verbesserung der Aerodynamik eines Nutzfahrzeuges mit einem Führerhaus mit Türen und darunter angeordneten Tritten für den Ein- und Ausstieg und mit einer vorderen Verkleidung , wobei in der vorderen Verkleidung Lufteinlässe vorhanden sind, wobei die Lufteinlässe über Luftleiteinrichtungen in oder an der Verkleidung mit dem vorderen Radkasten des Nutzfahrzeugs und mit einem Luftaustritt verbunden sind, wobei der mindestens eine Tritt des Führerhauses anklappbar ist und mindestens einem Durchströmungsbereich in Fahrzeuglängsrichtung aufweist.

Mit dieser Ausgestaltung wird der cw-Wert des Nutzfahrzeuges verbessert und das Maß der Verwirbelungen deutlich reduziert.

Dafür ist es notwendig, dass der mindestens eine Tritt im angelegten Zustand in einen zurückgesetzten Bereich der Verkleidung passt. Nur so lassen sich überstehende Bauteile und dadurch ausgelöste Luftwirbel vermeiden.

Vorteilhaft ist dabei, dass der mindestens eine Tritt im angelegten Zustand eine Fortsetzung der Außenkontur des Fahrzeugs bzw. der Verkleidung darstellt.

Es ist von Vorteil, dass sich der mindestens eine Durchströmungsbereich entlang der Fahrzeuglängsachse erstreckt.

Um möglichst viel einströmende Luft zu verwenden ist es sinnvoll, dass die Lufteinlässen in der Verkleidung des Nutzfahrzeuges in der XZ- Ebene angebracht sind.

### Beschreibung der Figuren

Die Erfindung wird nachfolgend beispielhaft unter Bezugnahme auf die beigefügte Zeichnung beschrieben.
Fig. 1 zeigt eine schematische Darstellung eines Nutzfahrzeugs,
Fig. 2 zeigt eine Schnittbild durch die erfindungsgemäße Vorrichtung,
Fig. 3 zeigt eine Ansicht im Frontbereich des Nutzfahrzeuges,
Figur 4 zeigt einen Ausschnitt aus dem Seitenbereich des Nutzfahrzeuges
Figur 5 zeigt eine Ansicht des Seitenbereich des Nutzfahrzeuges mit Tritten,
Figur 6 zeigt eine erste Ausführungsform der verschwenkbaren Tritte,
Figur 7 zeigt eine zweite. Ausführungsform.

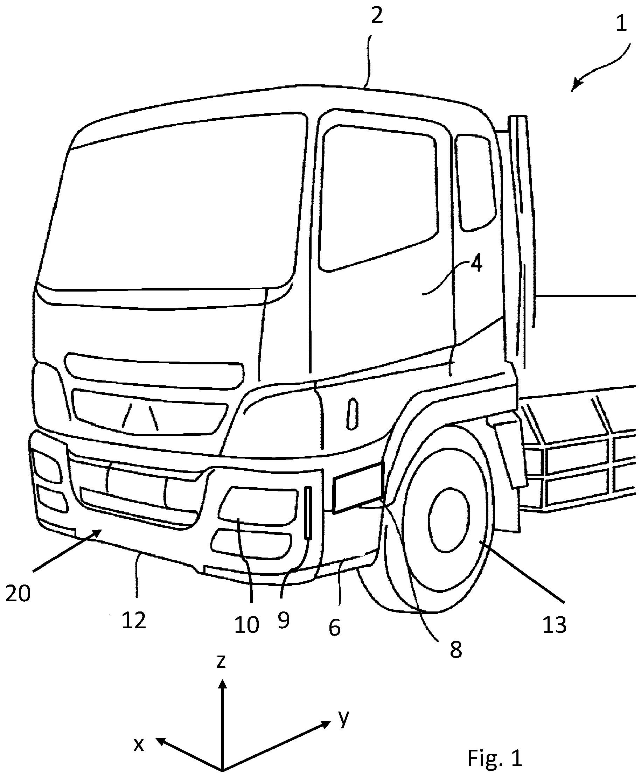

Figur 1 zeigt beispielhaft ein Nutzfahrzeug, in diesem Fall eine Zugmaschine 1 mit einem Führerhaus 2. Das Führerhaus weist von außen sichtbar Verkleidungen auf, die beispielsweise unter anderem von einem Stoßfänger 12 und von Kotflügeln 6 gebildet werden. Unter vorderer Verkleidung 20 werden alle Bauteile der Front und der Seiten des Fahrzeugs verstanden, die auf der Rohkarosserie aufgebracht werden.

Das Führerhaus 2 weist Seitentüren 4 auf. Um in das Fahrzeug zu gelangen, sind in der vorderen Verkleidung 20 Tritte 8 vorgesehen.

In der vorderen Verkleidung 20 des Führerhauses 2 sind Frontscheinwerfer 10 eingelassen. Um die Umströmung des Vorderrades 13 zu erreichen, sind in die Verkleidung 20 Lufteinlässen 9 eingebracht, in die die anströmende Luft beim Betrieb des Fahrzeugs eindringt. In der Figur 1 ist beispielhaft ein Lufteinlass zu erkennen, der sich nahe der Frontscheinwerfer 10 erstreckt.

Ein solcher Lufteinlass 9würde sich symmetrisch auch auf der anderen Seite des Fahrzeugs neben den Scheinwerfern erstrecken. Der Lufteinlass 9 kann unterschiedliche Größen aufweisen und ist in seiner Auslegung auf die zu erzielende Luftströmung optimiert.

Prinzipiell sollen die Lufteinlässen 9 sich im Frontbereich in der X-Z Ebene befinden, um möglichst effizient die anströmende Luft für die Verbesserung der Aerodynamik zu verwenden.

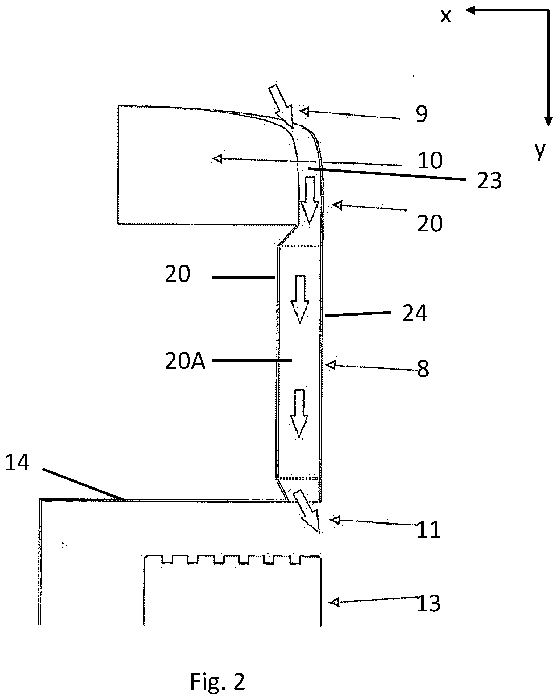

In Figur 2 ist in einem Schnitt entlang der Fahrzeuglängsrichtung Y gezeigt, wie die einströmende Luft verteilt wird. Neben dem Frontscheinwerfer 10 befindet sich in einem Teil der Verkleidung 20 einen Lufteinlass 9. Die Verkleidung 20 weist eine innere Struktur in Form eines Luftleitkanals 23 auf und im Bereich der Seitentür 4, die sich in dieser Zeichnung aus der Papierebene heraus erstreckt, zeigt die Verkleidung 20 einen in X-Richtung zurückgesetzten Bereich 20A. die Außenkontur 24 weist einen stetigen Verlauf ohne Lücken und Spalte auf, so dass geringe Verwirbelungen entstehen. In diesem Bereich 20A sind die Tritte 8 ausgebildet. Über einen Luftauslass 11, der sich im Bereich eines Radkasten 14 befindet, strömt die Luft in Richtung auf das Rad 13.

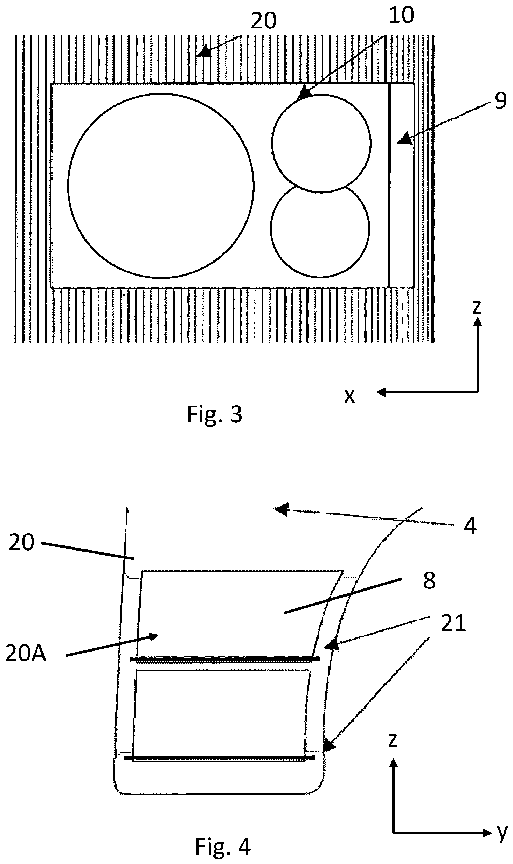

In Figur 3 ist thematisch der Frontscheinwerfer 10 in der Verkleidung 20 dargestellt. Der Lufteinlass 9 erstreckt sich in diesem Beispiel entlang der gesamten Bauhöhe des Frontscheinwerfers.

In Figur 4 ist eine Ansicht auf den Seitenbereich des Führerhauses 2 zu erkennen, wie er sich unterhalb der Seitentür 4 erstreckt. Es handelt sich um den Bereich 20A der vorderen Verkleidung 20, der gegenüber der Außenkontur 24 nach innen zurückgesetzt ist. Man erkennt in diesem Ausführungsbeispiel skizzenhaft zwei Tritte 8 und Achsen 21 an denen diese Tritte 8 um die Fahrzeuglängsachse y verschwenkbar angebracht sind.

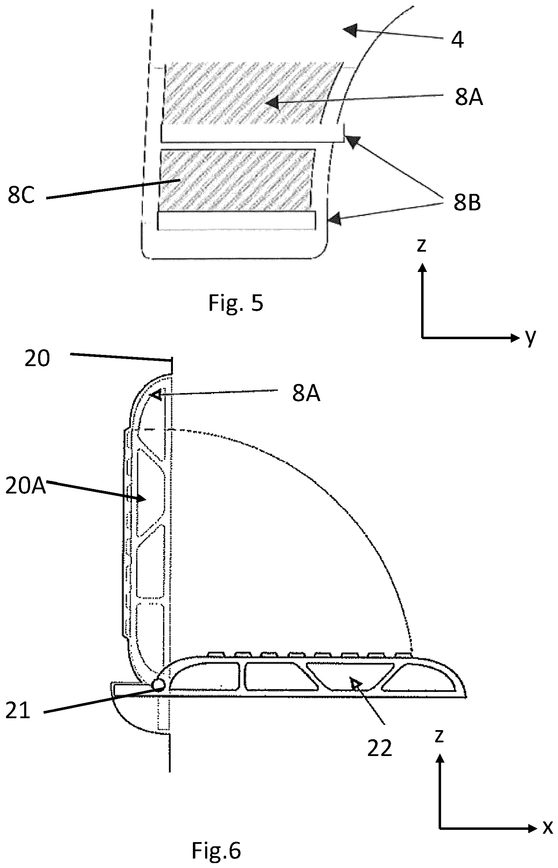

In Figur 5 ist die Ausführungsform noch mal dargestellt. Man erkennt die den an die vordere Verkleidung 20 angelegten Tritt 8A sowie schematisch den Blick auf die Stirnfläche des ausgeklappten Tritts 8B. Im angelegten Zustand des Tritts 8A erkennt man die strukturierte Trittfläche 8C der Tritte 8.

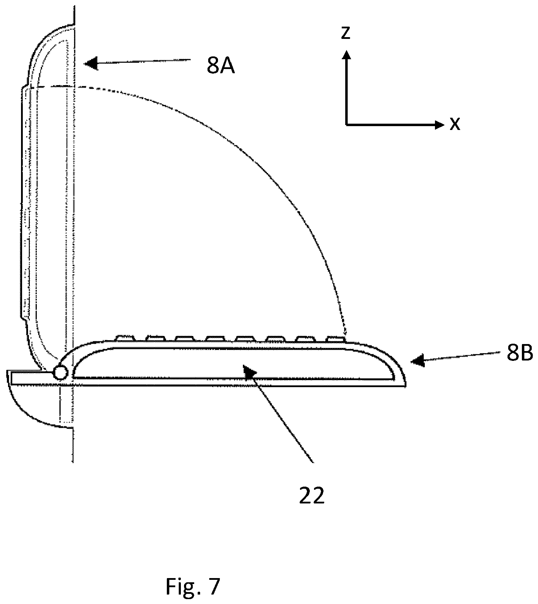

In Figur 6 und 7 sind zwei Ausführungsbeispiele der verschwenkbaren Tritte 8 dargestellt. Im angelegten Zustand 8A verschwindet der Tritt vollständig in dem zurückgesetzten Bereich 20 A der Verkleidung 20. Durch Verschwenken um die Achse 21 wird der Tritt 8 senkrecht zum Fahrzeug und zur vorderen Verkleidung 20 verschwenkt und kann als Aufstiegshilfe benutzt werden. Der Tritt weist dabei entweder eine einzige oder mehrere Durchströmungsbereiche 22 auf. Im Ausführungsbeispiel der Figur 6 wird der Tritt 8 durch eine Wabenstruktur oder Fachwerkstruktur gebildet. Er zeugt eine Vielzahl an Wabenzellen, die als Durchströmungsbereiche 22 dienen.

Im Ausführungsbeispiel der Figur 7 dagegen ist der Durchströmungsbereich der gesamte Innenbereich des hohl ausgeführten Tritts 8.

Im angelegten Zustand des Tritts 8A dienen die Durchströmungsbereiche dazu, dass die Luftströmung, wie in Figur 2 durch die Pfeile angedeutet, ohne Probleme durch den Tritt strömen kann.

Je nach baulicher Anordnung werden Tritt oder mehrere Tritte vorgesehen. Die Tritte 8 haben eine Außenkontur, die sich harmonisch in den zurückgesetzten Bereich 20 A einfügt, wobei die Außenkontur 24 des Fahrzeugs entlang der Verkleidung und der Tritte ohne Absätze ausgeführt ist.

Die Durchströmungsbereiche 22 erstrecken sich entlang der Fahrzeuglängsachse Y und der gesamten baulichen Länge des Tritts 8.

### Bezugszeichenliste

- 1: Zugmaschine
- 2: Führerhaus
- 3: Seitentür
- 6: Kotflügel
- 8: Tritt
- 8A: Tritt angelegt
- 8B: Tritt ausgeklappt
- 8C: Trittfläche
- 9: Lufteinlass
- 10: Scheinwerfer
- 11: Luftauslass
- 12: Stoßfänger
- 13: Rad
- 14: Radkasten
- 20: vordere Verkleidung
- 21: Achse
- 22: Durchströmungsbereich
- 23: Luftleiteinrichtung
- 24: Außenkontur
- 20A: zurückgesetzter Bereich

## Patentansprüche

1. Vorrichtung zur Verbesserung der Aerodynamik eines Nutzfahrzeuges mit einem Führerhaus (2) mit Türen (4) und darunter angeordneten Tritten (8) für den Ein- und Ausstieg und mit einer vorderen Verkleidung (20), wobei in der vorderen Verkleidung (20) Lufteinlässe (9) vorhanden sind, wobei die Lufteinlässe (9) über Luftleiteinrichtungen (23) in oder an der vorderen Verkleidung (20) mit dem vorderen Radkasten (14) des Nutzfahrzeugs und mit einem Luftaustritt (11) verbunden sind, **dadurch gekennzeichnet, dass** der mindestens eine Tritt (8) des Führerhauses (2) anklappbar ist und mindestens einem Durchströmungsbereich (22) in Fahrzeuglängsrichtung (y) aufweist.

2. Vorrichtung nach Anspruch 1 **dadurch gekennzeichnet, dass** der mindestens eine Tritt (8) im angelegten Zustand in einen zurückgesetzten Bereich (20A) der vorderen Verkleidung (20) passt.

3. Vorrichtung nach Anspruch 1 oder 2, **dadurch gekennzeichnet, dass** der mindestens eine Tritt (8) im angelegten Zustand in seiner Kontur eine Fortsetzung der Außenkontur (24) des Fahrzeugs bzw. der vorderen Verkleidung (20) darstellt.

4. Vorrichtung nach einem der vorhergehenden Ansprüche, **dadurch gekennzeichnet, dass** sich der mindestens eine Durchströmungsbereich (22) entlang der Fahrzeuglängsachse (y) erstreckt.

5. Vorrichtung nach einem der vorhergehenden Ansprüche, **dadurch gekennzeichnet, dass** die Lufteinlässen (9) in der vorderen Verkleidung (20) des Nutzfahrzeuges in der XZ-Ebene angebracht sind.
